Europäisches Patentamt

European Patent Office

Office européen des brevets

(11) Numéro de publication : **0 443 889 A1**

(12)
# DEMANDE DE BREVET EUROPEEN

(21) Numéro de dépôt : 91400149.0

(51) Int. Cl.⁵ : **G05D 23/19, B30B 15/34**

(22) Date de dépôt : 23.01.91

(30) Priorité : 19.02.90 FR 9001974

(43) Date de publication de la demande :
28.08.91 Bulletin 91/35

(84) Etats contractants désignés :
AT BE DE DK ES FR GB IT LU NL

(71) Demandeur : ELMETHERM
Saint Auvent
F-87310 Saint Laurent sur Gorre (FR)

(72) Inventeur : Lenfant,Jean Pierre
Le Puy du Moulin
F-87600 Rochechouart (FR)
Inventeur : Picot,Fernand
2 Allée de Pins
F-95210 Saint Gratien (FR)
Inventeur : Trouillaud,Francis
Le Petit Bastier
F-87110 Bosmie l'Aiguille (FR)

(74) Mandataire : Polus, Camille et al
c/o Cabinet Lavoix 2, Place d'Estienne d'Orves
F-75441 Paris Cedex 09 (FR)

(54) "Dispositif de régulation de la température d'une pièce massive".

(57) Dispositif de régulation de la température d'une pièce massive munie d'au moins une cavité comprenant une enceinte close (32), remplie partiellement d'un liquide caloporteur (33) vaporisable, des liaisons fluides (42) entre cette cavité et cette enceinte, formant un circuit fermé, des moyens de chauffage (44) du liquide caloporteur de puissance au moins suffisante pour porter ce liquide à ébullition, caractérisé en ce qu'il comprend des moyens (40) automatiques de purge de l'air contenu dans le circuit de façon que l'ensemble de ce circuit travaille sous vide d'air.

EP 0 443 889 A1

FIG_1

# DISPOSITIF DE REGULATION DE LA TEMPERATURE D'UNE PIECE MASSIVE

La présente invention a pour objet un dispositif de régulation de la température de pièces massives, notamment de plateaux de presse.

De nombreuses machines requièrent la régulation en température de certaines de leurs pièces et c'est le cas notamment des presses dont les plateaux doivent être portés à des températures variant de 80° C jusqu'à 200° C pour fixer un ordre de grandeur. On trouve ces presses dans le domaine de la mise en forme des matières plastiques ou des plaques de bois multicouches.

Il est généralement prévu deux plateaux dont l'un est fixe réglable et dont l'autre est mobile. Ces deux plateaux portent sur leurs faces en vis-à-vis des empreintes destinées à conférer à la pièce brute sa forme définitive sous la double action du chauffage et du pressage.

Compte tenu des efforts de serrage et de la résistance intrinsèque de la pièce brute, il est nécessaire que les plateaux soient massifs de façon à ne subir aucune déformation ou du moins que des déformations compatibles avec les tolérances exigées pour la pièce.

On constate donc que ces plateaux de presse sont massifs, d'épaisseur très variable. On sait par ailleurs que durant la phase de travail, il y a échange de calories entre les plateaux et la pièce et l'on sait également que les plateaux sont généralement réalisés en acier noir de façon à limiter le coût.

De plus, du fait des grands nombres de modèles de produits manufacturés les séries de pièces sont de plus en plus courtes, si bien que les industriels sont contraints de changer régulièrement les outillages portés par les plateaux de presse pour réaliser des séries de pièces différentes. Ces outillages par leur diversité requièrent une meilleure répartition des calories à l'interface plateau-outillage.

Toutes ces données et contraintes ont conduit aux différents types de chauffage décrits ci-après.

Le chauffage par la vapeur est la solution la plus couramment retenue pour chauffer des pièces massives et plus particulièrement les plateaux de presse.

Dans ce cas, il est prévu une production de vapeur centralisée en un point de l'atelier ou de l'usine au moyen d'une chaudière d'un type quelconque alimentée à l'électricité ou avec tout combustible fossile. Un réseau de canalisations part de cette centrale de production de vapeur et alimente individuellement chacune des presses. Ce réseau est fixe en plafond ou au sol.

La vapeur issue de la centrale de production rentre donc, après avoir parcouru les différentes canalisations, dans chacun des plateaux de la presse et l'évacuation se fait à l'air libre ou alors il est prévu une recirculation. Dans les deux cas il est nécessaire de prévoir la récupération des condensats résultants du refroidissement de la vapeur d'eau au contact des parties froides des plateaux. Cette solution présente un avantage très important qui la fait généralement préférer aux solutions qui seront décrites ultérieurement, qui est celui de l'autorégulation en température. En effet, la vapeur d'eau se condense sur les points froids si bien que c'est sur les parties froides qu'il y a le transfert de calories le plus important. Il n'y a donc pas de problème de mesure de la température aux différents points du plateau et cette solution permet de s'affranchir de la plupart des variations d'épaisseur, au gradient de répartition près. Les inconvénients liés au chauffage par la vapeur avec centrale de production sont néanmoins très nombreux.

Le premier, ainsi que cela a été indiqué précédemment est le problème de la récupération des condensats. Ces condensats peuvent bien évidemment être rejetés directement à l'égout mais il est néanmoins nécessaire de prévoir dans un tel cas un réseau complémentaire de canalisations.

De plus, ce chauffage par la vapeur n'est pas souple d'utilisation car il est nécessaire de mettre en route la centrale quel que soit le nombre de presses utilisé et tout déplacement "géographique" d'une presse au sein de l'atelier ou de l'usine nécessite également une modification du réseau de distribution.

La chaudière pour la production de vapeur doit également être calculée pour un nombre de presses déterminé. Compte tenu du fait que le nombre de presses peut évoluer, les utilisateurs prévoient généralement des chaudières surdimensionnées. Ceci entraîne des investissements supérieurs aux besoins et si l'accroissement est suffisant il peut s'avérer nécessaire de changer la totalité de la chaudière ce qui représente encore des frais supplémentaires.

D'autre part, sur l'ensemble des canalisations, il y a des déperditions de calories supplémentaires ou il faut prévoir un calorifugeage.

Une autre solution consiste à chauffer les plateaux de presse à l'aide d'un thermofluide tel que de l'huile par exemple que l'on fait circuler dans les plateaux. Ces thermofluides couvrent des plages de températures importantes car inférieures à 100° C si besoin est, mais également plusieurs centaines de degrés sans travailler sous pression.

Mais dans ce cas, l'avantage essentiel que procurait la vapeur, à savoir l'autorégulation, est supprimé compte tenu du fait que l'échange de calories entre le thermofluide et le plateau s'effectue suivant une distribution très complexe impossible à déterminer point par point. De plus pour un chauffage suffisant, compte tenu du faible pouvoir d'échange, il faut assurer un gros débit et une vitesse optimum également difficile à déterminer. De plus l'huile s'oxyde au fur-et-à-mesure de son utilisation et il faut prévoir un remplacement régulier suivant une périodicité de quelques mois, six mois généralement.

Un autre inconvénient est celui des fuites, car dans le cas de l'huile par exemple, ces fuites peuvent provoquer des incendies lorsque cette huile entre en contact avec des parties suffisamment chaudes. Enfin, ces thermofluides, notamment l'huile, ne sont pas des liquides agréables à manipuler. Cette solution ne présente également aucune souplesse d'utilisation puisqu'elle présente les mêmes inconvénients que le chauffage à la vapeur lors des déplacements de machine, lors du choix de la chaudière et de son dimensionnement, ou lors du fonctionnement.

Une troisième solution consiste à chauffer les plateaux de presse au moyen de crayons chauffants électriques. Dans ce cas les plateaux de presse sont munis d'alésages dans lesquels sont introduits des crayons chauffants eux-mêmes reliés à une source d'énergie électrique. Cette solution présente l'avantage d'être très propre, de ne nécessiter aucune centrale de chauffe et les machines peuvent être augmentées en nombre ou bien simplement deplacées sans aucune difficulté.

De tels avantages rendent cette solution attractive mais elle n'est pas sans inconvénient. En effet, la précision de la régulation en température est très approximative car il n'existe pas d'autorégulation ce qui provoque des écarts de température très importants au sein d'un même plateau. Une solution pour affiner cette précision de la régulation consiste à associer un régulateur pour chacune des résistances ainsi qu'une sonde de mesure de la température. Un tel gain en précision s'effectue au détriment du prix de l'installation car ces dispositifs, sondes et résistances, coûtent très cher. Il est également nécessaire de remarquer que tout changement de plateau nécessite un jeu de crayons particuliers. En effet, si l'on veut que le transfert de calories entre les crayons chauffants et la plaque de presse s'effectue avec un bon rendement, il faut que les crayons soient parfaitement ajustés dans les alésages ménagés dans les plateaux. Après une période de fonctionnement, même de courte durée, les crayons ne peuvent plus être extraits du plateau ou du moins l'opération de retrait quand elle est possible, est longue et délicate. Une telle solution n'est donc pas très souple elle non plus.

Pour répondre à la demande de l'industrie, il est nécessaire de réaliser un dispositif de régulation en température qui allie les avantages de l'autorégulation procurée par le chauffage à la vapeur, la grande plage d'utilisation et de variation des températures présentée par le chauffage par thermofluide et la souplesse et la propreté du chauffage électrique qui ne requiert aucune production centralisée, aucun réseau de canalisations mais un simple raccordement électrique.

L'objet de la présente invention est de proposer un dispositif de régulation en température d'une pièce massive qui assure une autorégulation à une température préfixée et réglable de la pièce, qui soit rattaché à une ou quelques machines, qui puisse être déplaçable avec celle-ci, qui puisse être mis en marche et arrêté de façon simple, qui ne présente aucun risque d'inflammation, dont le coût de fonctionnement est peu élevé, qui présente une grande précision de régulation en température.

A cet effet, selon l'invention le dispositif de régulation de la température d'une pièce massive munie d'au moins une cavité, selon l'invention comprend une enceinte close, remplie partiellement d'un liquide caloporteur, des liaisons entre cette cavité et l'enceinte, des moyens de chauffage du liquide caloporteur de puissance au moins suffisante pour porter ce liquide à ébullition et se caractérise en ce qu'il comprend des moyens automatiques de purge de l'air contenu dans le circuit de façon que l'ensemble du circuit travaille sous vide d'air.

Selon une caractéristique particulière l'enceinte close est reliée en circuit fermé à la cavité par des conduits d'alimentation et de retour, les moyens de purge étant disposés à la sortie de la cavité.

Selon une autre caractéristique, les moyens de purge comprennent une électrovanne commandée par un automate relié également à au moins deux sondes de mesure de température, à proximité de l'électrovanne d'une part et dans l'enceinte d'autre part. L'automate est programmé pour commander l'ouverture de l'électrovanne pendant une durée préfixée lorsque les deux températures mesurées sont différentes et que cette différence est supérieure à une valeur d'écart donnée.

L'automate comprend également des moyens pour faire varier la valeur de consigne de la température à la sortie de la pièce de façon à faire varier la température de consigne dans l'enceinte et successivement dans la cavité.

Selon l'invention le dispositif comprend également des moyens de régulation du niveau de liquide dans l'enceinte.

Selon une caractéristique particulière, l'électrovanne des moyens de purge est reliée à un réservoir de récupération des condensats de façon à permettre un recyclage du liquide caloporteur.

Selon une variante de l'invention, le dispositif se caractérise en ce que la cuve est disposée à un niveau situé au dessus des points d'entrée et de sortie de la cavité en ce qu'il comprend une seconde enceinte disposée à la sortie de la cavité et interposée sur la conduite de retour et une pompe interposée entre cette seconde enceinte et l'enceinte principale.

Selon une application particulière de l'invention, le dispositif s'applique à la régulation en température d'un plateau de presse, le fluide caloporteur étant de l'eau.

La présente invention est décrite ci-après selon un mode de réalisation particulier en regard des figures annexées qui représente :

    – figure 1, une vue en élévation latérale avec coupe partielle de l'ensemble du dispositif de régulation appliqué à une presse,

    – la figure 2 est une vue en élévation suivant la direction de la flèche F avec suppression du pupitre de commande électrique et coupe partielle,

    – la figure 3 est une vue détaillée en coupe longitudinale de l'enceinte,

    – la figure 4 est une vue en coupe transversale suivant la ligne 4-4 de la figure 3,

    – la figure 5 est une vue en coupe suivant la ligne 5-5 de la figure 3,

    – la figure 6 est une vue de dessus de la figure 3 avec arrachement partiel, et

    – la figure 7 est une représentation schématique du dispositif selon l'invention avec récupération des condensats,

    – la figure 8 est une représentation schématique du dispositif avec enceinte surélevée et

    – la figure 9 représente une variante de réalisation de l'enceinte close avec axe longitudinal vertical.

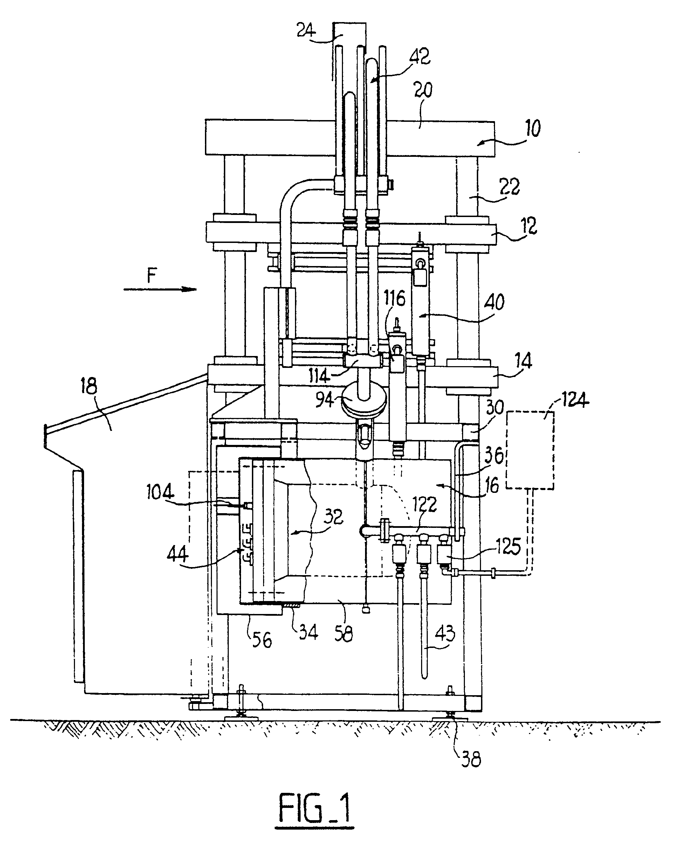

Sur la figure 1 on a représenté une presse 10, à deux plateaux l'un 12, respectivement fixe et réglable en hauteur et l'autre 14 mobile, le dispositif 16 de régulation selon l'invention et le pupitre de commande électrique 18.

La presse 10 comprend de façon connue un bâti 20, comprenant des colonnes de guidage 22 sur lesquelles se déplacent les plateaux 12 et 14. Le plateau fixe 12 est réglable en hauteur grâce à une vis 24 et un écrou 26 tandis que le plateau 14 est entraîné en translation sur les colonnes 22 grâce à un vérin 28 disposé en partie basse de la presse.

Le dispositif de régulation 16 comprend un bâti 30 supportant une enceinte close 32, des étriers 34 une patte 36 solidaires du bâti.

Le bâti repose sur le sol par l'intermédiaire de pieds 38.

Le dispositif comprend également des moyens automatiques de purge 40 des liaisons fluides 42 entre les plateaux de presse et l'enceinte 32 ainsi que des moyens de chauffage 44 de l'enceinte.

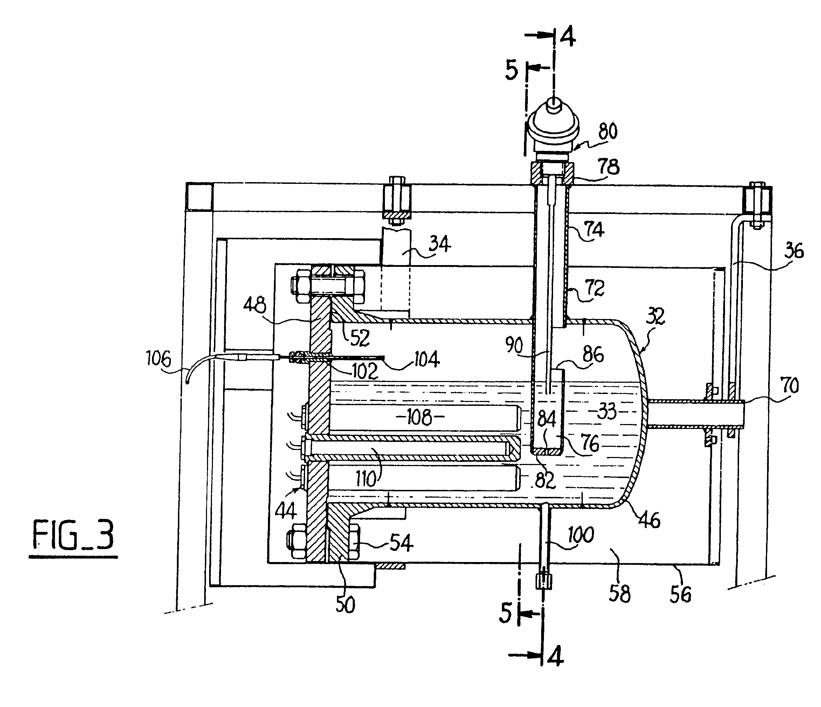

L'enceinte 32 représentée sur la figure 3 comprend une cuve 46 hermétiquement fermée par un couvercle 48 relié à la cuve par une bride annulaire 50 avec un joint d'étanchéité 52 interposé entre cuve et couvercle et des boulons de serrage 54. La cuve 46 et son couvercle sont entourés d'un capotage 56 et d'un matériau isolant 58.

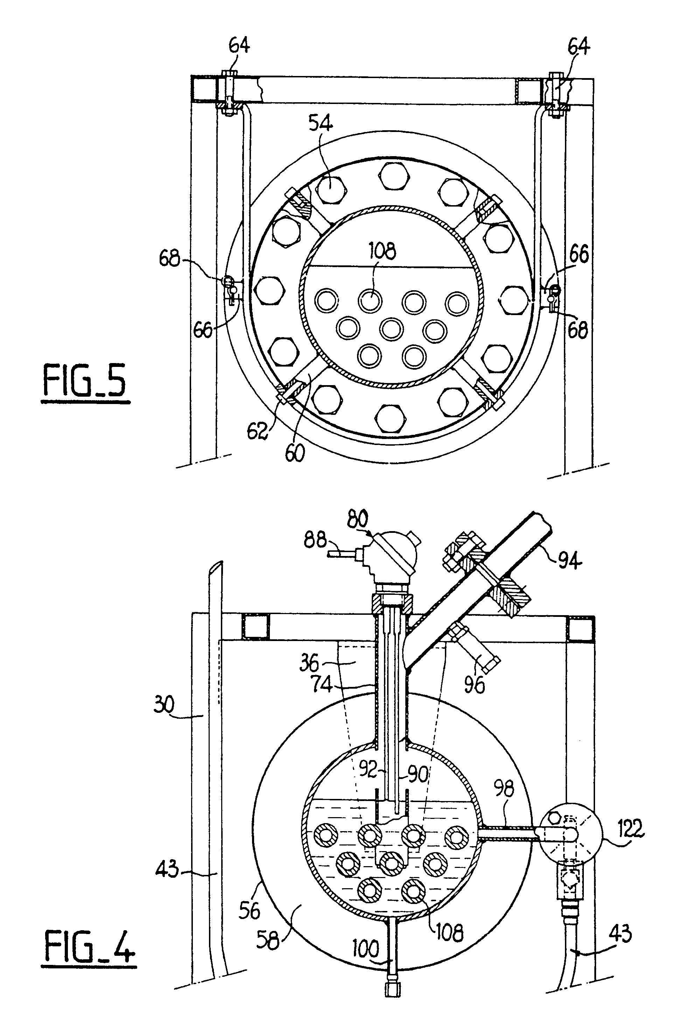

Ainsi que cela est représenté en détail sur la figure 5, le capotage 56 est fixé sur la cuve par l'intermédiaire des entretoises 60 et des boulons 62. La bride 34 est fixée par les boulons 64 au bâti et supporte directement le capotage auquel elle est fixée par des pattes 66 verrouillées par des goupilles 68. La cuve 46 est en outre munie d'un support 70 qui coopère avec un alésage de la patte 36 pour assurer le maintien de la cuve par rapport au bâti.

La cuve 32 comprend un piquage d'évacuation 72. Ce piquage 72 comprend un tube 74 qui passe à travers la paroi de la cuve 46 pour plonger à sa partie inférieure 76 dans le liquide caloporteur 33 et qui émerge à sa partie supérieure 78, cette extrémité supérieure recevant un détecteur de niveau 80.

Le tube 74 est fermé à l'extrémité de sa partie inférieure 76 par une plaque de fond 82 munie d'un ajutage 84. Par ailleurs, le tube 74 comprend une fenêtre 86 ménagée dans l'espace libre au dessus du fluide caloporteur 33.

Ainsi que cela est mieux représenté sur la figure 4, le détecteur de niveau 80 comprend deux tubes de prise de niveau mini et maxi 90 et 92. Sur ce piquage d'évacuation il est prévu un raccord 94 qui relie les tubes souples des liaisons fluides 42 au piquage d'évacuation 72. Il est également prévu une soupape de sécurité 96 de type connu et requise sur tout dispositif travaillant en pression.

La cuve comporte en outre un piquage d'introduction 98 débouchant en dessous du niveau de liquide caloporteur 33 et relié au conduit de retour 43. Un piquage de vidange 100 est prévu à la partie inférieure de la cuve 46, en point bas de façon à pouvoir vider complètement le liquide caloporteur en cas de besoin.

Le couvercle comprend également un piquage 102 pour permettre le passage d'une sonde de température 104 débouchant au dessus de la surface libre du fluide caloporteur 33.

La sonde 104 est reliée par un câble 106 à un automate de pilotage (non représenté) ainsi que cela sera expliqué ultérieurement.

Les moyens de chauffage 44 de l'enceinte 32 comprennent des doigts de gant 108 fixés dans le couvercle dans lesquels sont disposées des résistances électriques chauffantes 110.

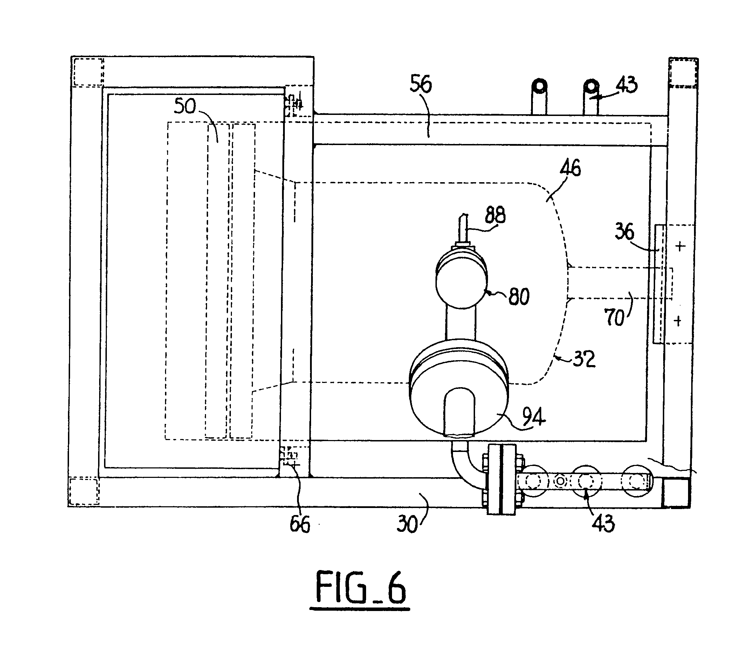

Sur la figure 6 on a représenté une vue de dessus dans laquelle les éléments identiques porteront les mêmes références que sur les figures précédentes.

Les liaisons fluides 42 entre le raccord 94 et les plateaux sont réalisées au moyen de conduits souples d'alimentation maintenus par un support 112 de façon à faciliter le déplacement des tuyaux lors des mouvements des plateaux sans provoquer leur détérioration.

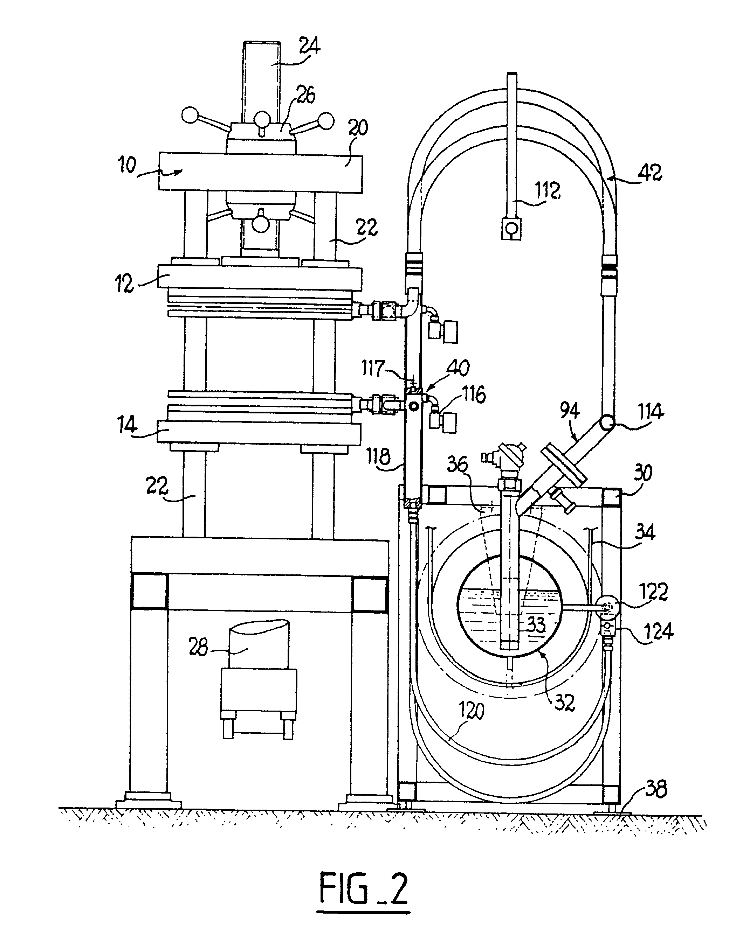

Dans la variante représentée, afin de pouvoir alimenter chacun des deux plateaux, il est prévu deux conduits d'alimentation indépendants. Il suffit de prévoir un dédoublement 114 à l'extrémité du raccord 94 ainsi que cela est représenté sur les figures 1 et 2. Les raccords entre les conduits souples et les plateaux s'effectuent de façon connue. En effet, les plateaux sont munis d'origine d'une entrée et d'une sortie ainsi que d'une cavité interne.

A la sortie des deux plateaux, immédiatement après le raccord sont disposés les moyens de purge 40 qui comprennent une électrovanne 116 et une sonde 117 de mesure de température et disposée à la partie supérieure d'un tube rigide 118 lui-même raccordé à des tubes souples 120 constituant les conduits de retour des condensats. L'extrémité de ces tubes souples est fixée sur le piquage d'introduction qui comprend un collecteur 122 ainsi que des clapets anti-retour 124 en amont du collecteur et disposés à l'extrémité des tubes 120.

Afin d'ajuster le niveau de liquide caloporteur dans la cuve 46, le détecteur de niveau 80 agit par l'intermédiaire de l'automate, sur une électrovanne 125 commandée électriquement et disposée entre le collecteur 122 et le réservoir 124 qui contient du liquide caloporteur de réserve.

Le fonctionnement du dispositif de régulation selon l'invention est décrit ci-après.

Lors de la première mise en fonctionnement l'enceinte close comprend de l'eau et de l'air, l'ensemble du circuit étant à température ambiante.

Les résistances chauffantes 110 sont alimentées en énergie électrique ce qui provoque la montée en température du liquide caloporteur 33 jusqu'à sa mise en ébullition. La montée en pression provoque le déplacement de la vapeur de l'enceinte close jusque dans les plateaux dans la cavité desquels elle circule pour ressortir, après condensation, dans les tubes 118 rigides et à travers les tubes souples 120 jusque dans le réservoir 46. Durant cette phase de montée en température, le niveau d'eau 33 est toujours disposé en dessous de l'ouverture 86 dans le tube 74 du piquage d'évacuation 72 afin que le détecteur de niveau 80 ne soit pas perturbé par les variations brusques de niveau ou par l'ébullition puisque le niveau est mesuré dans le tube 74 et que l'ajutage 84 atténue toute variation brusque de niveau.

Durant cette phase la sonde 104 détecte une température T1 dans l'enceinte qui est différente de la température T2 mesurée à proximité des électrovannes 116. L'électrovanne 116 est alors ouverte par l'automate qui détecte une différence de température pendant une durée prédéterminée. Ainsi un certain volume d'air, accumulé dans le tube 118 dans sa partie haute, est évacué à travers l'électrovanne 116. La partie inférieure du tube souple est remplie d'eau de condensation et l'air entraîné par la vapeur s'accumule dans ce tube 118.

Pour qu'il y ait évacuation à la purge il faut que la pression correspondant à la température interne soit supérieure à la pression atmosphérique.

Suivant les besoins les plateaux de presse doivent être portés à une température T3 donnée qui sera appelée température de consigne. Cette valeur de température de consigne est enregistrée dans l'automate qui compare en permanence la température T2 et la température T3 de consigne.

Lors de la mise en marche il est nécessaire de prévoir une température T3 supérieure au point d'ébullition du liquide caloporteur 33 à pression atmosphérique. Par la suite après que le vide d'air ait été fait, T3 doit être supérieure à la température d'ébullition sous vide d'air.

L'automate compare également les températures T2 et T1 de façon à provoquer périodiquement l'ouverture de l'électrovanne 116 tant que les températures T1 et T2 sont différentes et que cette différence est supérieure à une valeur d'écart donnée. En effet, toute différence de température entre ces deux sondes indique la présence d'air dans le circuit.

Une fois le circuit purgé de l'air initial, le dispositif est prêt à fonctionner pour des températures inférieures à 100° C, entre 60 et 70° C, jusqu'à des températures de 200° C en fonction des besoins. Cette possibilité de travailler à des températures inférieures à 100° est due au fait que le circuit travaille sous vide et que le point d'ébullition du liquide caloporteur, en l'occurrence de l'eau, est abaissé. Quant à la montée en température, il suffit d'apporter les calories nécessaires au fluide caloporteur ce qui fait également monter la pression dans le circuit étanche. Il est bien entendu que les différentes parties du circuit et les différents raccords devront être prévus en conséquence de façon à pouvoir résister à des pressions allant jusqu'à 20 bars et à des dépressions.

Dans le cas où la presse doit être arrêtée, il suffit de ne plus alimenter les résistances des moyens de chauffage 44 pour que l'ensemble du système refroidisse. Le système reste sous vide et le redémarrage de la presse s'obtient très rapidement par alimentation des résistances chauffantes 110 qui font monter en température le fluide caloporteur dans un délai très court compte tenu du faible volume.

Au-fur-et-à-mesure du fonctionnement, les micro-fuites et la porosité de certains éléments provoquent des entrées d'air de très faible importance mais dès qu'il y a une accumulation d'un volume d'air suffisant pour provoquer une différence de température, l'air est évacué par l'électrovanne 116 jusqu'à ce que la différence des températures T1 dans l'enceinte et T2 à proximité de l'électrovanne soit inférieure à la valeur d'écart fixé.

De même l'évacuation par l'intermédiaire de l'électrovanne 116 provoque de très faibles pertes de liquide qui accumulées peuvent néanmoins provoquer une baisse du niveau du liquide 33 dans la cuve 46, cette différence étant enregistrée par le détecteur de niveau 80. Dans ce cas, le détecteur de niveau provoque l'ouverture de l'électrovanne du réservoir 124 de façon à admettre un complément de liquide caloporteur dans le réservoir 46 par l'intermédiaire du collecteur 122. Cette opération n'est réalisée qu'en température basse lorsque l'enceinte est sous vide.

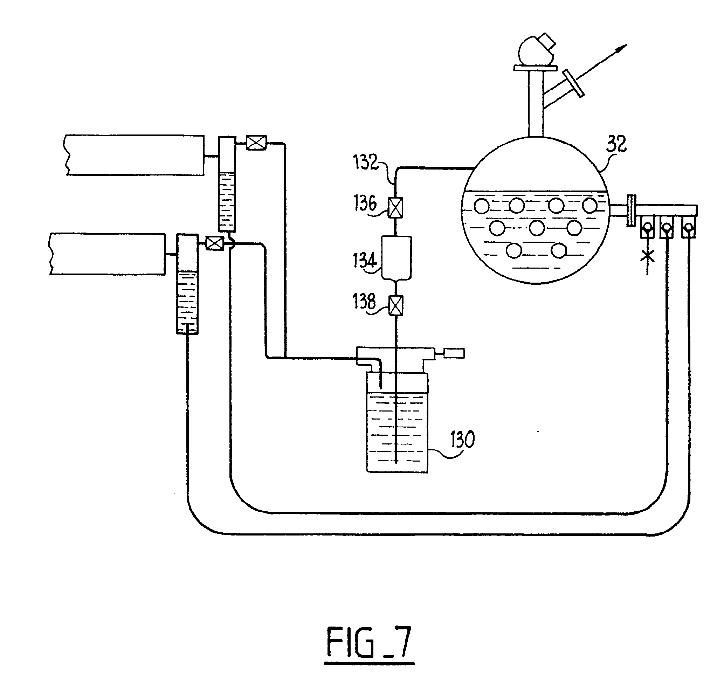

Selon une variante de l'invention représentée sur la figure 7, il est également possible de prévoir un circuit de recyclage qui récupère l'air évacué à travers l'électrovanne 116 ainsi que la faible partie de vapeur associée. Un réservoir 130 permet de collecter le liquide évacué à travers l'électrovanne lorsqu'il se condense. Ce réservoir est étanche aux liquides, mais il est muni d'un évent de façon qu'il soit toujours maintenu à la pression atmosphérique. Un tel réservoir est relié par une canalisation 132 à l'enceinte close 32, plus particulièrement au réservoir 46. Un réservoir tampon 134 et deux vannes 136 et 138 sont interposés sur cette canalisation 132 de façon à pouvoir réintroduire le liquide caloporteur accumulé dans le réservoir 130 dans le réservoir 46 par ouverture alternative des vannes 136 et 138.

Dans ce cas, le réservoir d'appoint 124 peut être supprimé au profit du circuit de recyclage. Les vannes 136 et 138 à commande électrique sont pilotées par l'automate de façon à réinjecter du liquide caloporteur dès que le détecteur de niveau 80 enregistre une baisse de niveau suffisante.

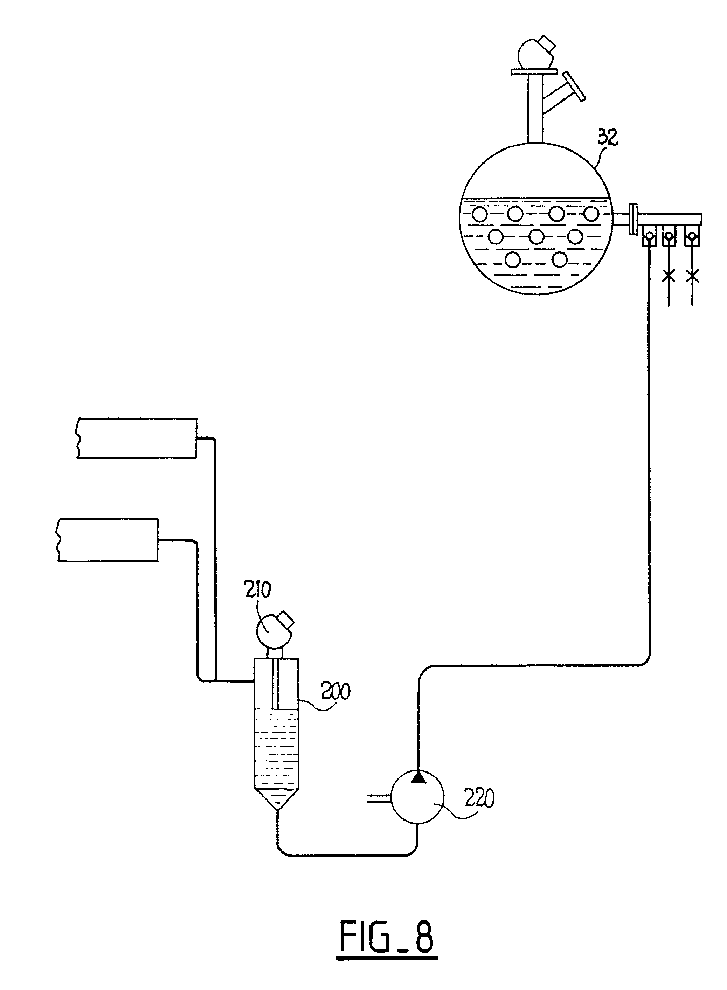

Il est prévu une variante d'agencement des différents composants représentée schématiquement sur la figure 8.

L'enceinte close 32 est disposée en partie haute au dessus des plateaux de presse. Dans ce cas, il est prévu une seconde enceinte 200 résistante à la pression. Afin de compenser la différence de niveau, il faut disposer sur cette enceinte un détecteur de niveau 210 avec mini et maxi. Dans ce mode de réalisation, la seconde enceinte peut être commune aux deux plateaux.

De plus, il faut interposer une pompe de relevage 220 de faible puissance.

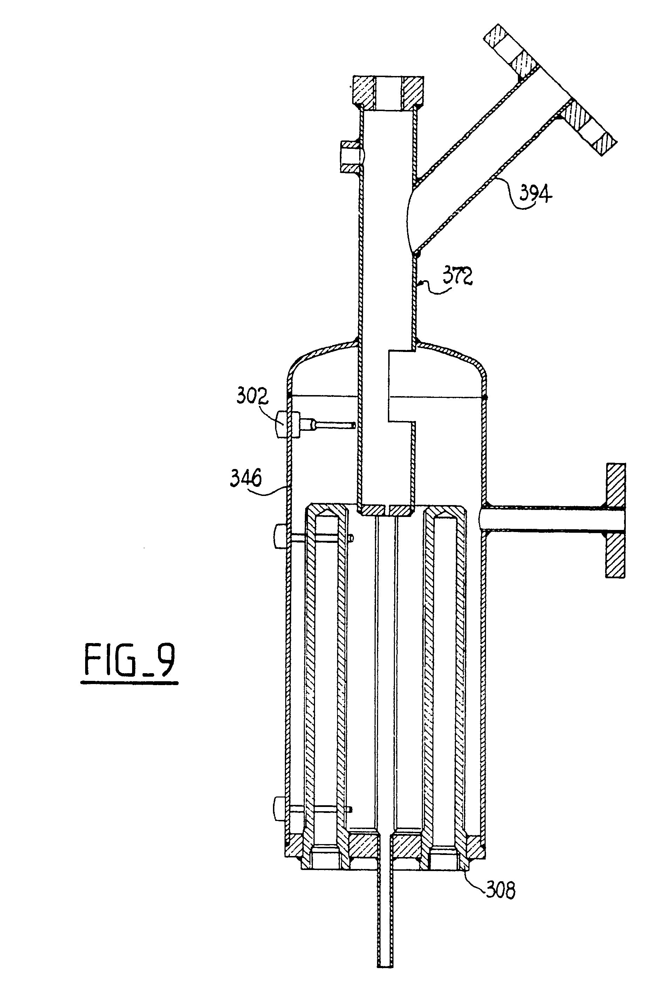

Sur la figure 9, on a représenté une variante de cuve 346 avec axe longitudinal vertical qui est monolithique sans couvercle ni boulons.

La sortie de la vapeur 394 est située en partie supérieure et le piquage d'évacuation 372 est identique à celui du mode préféré de réalisation.

L'avantage principal réside dans le gain de place et dans la suppression de liaison amovible bride-couvercle, diminuant par la même les coûts.

Les doigts de gant 308 sont également orientés parallèlement à l'axe longitudinal de la cuve. On retrouve également un piquage 302 pour la sonde de mesure de température.

En ce qui concerne l'ensemble des variantes du dispositif selon l'invention, le liquide utilisé est de l'eau. Il faut néanmoins, prévoir une composition de l'eau dont le pH et les additifs éventuels sont compatibles avec les matériaux constituant les éléments du dispositif selon l'invention.

Quant à l'automate, il est nécessaire de préciser que ce terme n'est pas obligatoirement un automate programmable industriel mais peut être constitué d'un simple circuit logique avec des régulateurs, et autres temporisateurs. De tels régulateurs sont disponibles dans le commerce sous la marque EUROTHERM, notamment la série 800. De tels régulateurs sont munis de fonctions algorithme, bande proportionnelle, dérivé et intégrale. Dans le mode de réalisation principal, ces éléments sont regroupés dans le pupitre de commande électrique 18.

En variante également, le dispositif peut comprendre des moyens permettant de faire le vide ou apportant une assistance pour faire le vide dès le démarrage.

Dans ce cas le dispositif de régulation est encore plus rapide à mettre en oeuvre. Ces moyens sont du type pompe à vide ou trompe à vide à venturi branchée sur un circuit d'alimentation en eau ou en air.

Avec le dispositif de régulation selon l'invention il est également possible d'alimenter plusieurs récepteurs à température identique avec une distribution en parallèle notamment dans le cas d'une presse à deux fois deux plateaux.

## Revendications

1. Dispositif de régulation de la température d'une pièce massive munie d'au moins une cavité comprenant une enceinte close (32), remplie partiellement d'un liquide caloporteur (33) vaporisable, des liaisons fluides (42, 43) entre cette cavité et cette enceinte, formant un circuit fermé, des moyens de chauffage (44) du liquide caloporteur de puissance au moins suffisante pour porter ce liquide à ébullition, caractérisé en ce qu'il comprend des moyens (40) automatiques de purge de l'air contenu dans le circuit de façon que l'ensemble de ce circuit travaille sous vide d'air.

2. Dispositif selon la revendication 1 caractérisé en ce que l'enceinte close (32) est reliée en circuit fermé à la cavité par des conduits d'alimentation (42) et de retour (43) et en ce que les moyens de purge (40) sont disposés à la sortie de la cavité.

3. Dispositif selon la revendication 1 ou 2 caractérisé en ce que les moyens de purge comprennent une électrovanne de purge (116) commandée par un automate, au moins deux sondes (117, 104) de mesure de température disposées l'une à proximité de l'électrovanne et l'autre dans l'enceinte, reliées à l'automate de façon à comparer la température T2 mesurée à proximité de l'électrovanne et la température T1 mesurée dans l'enceinte.

4. Dispositif selon la revendication 3, caractérisé en ce que l'automate est programmé pour commander l'ouverture de l'électrovanne pendant une durée préfixée lorsque T2 est différent de T1 d'une valeur supérieure à un écart programmé.

5. Dispositif selon l'une quelconque des revendications 3 ou 4, caractérisé en ce que l'automate comprend des moyens pour faire varier la valeur de consigne de la température T1 de façon à faire varier la température dans la cavité et simultanément la température de la pièce.

6. Dispositif selon l'une quelconque des revendications précédentes, caractérisé en ce qu'il comprend des moyens de régulation du niveau du liquide dans l'enceinte.

7. Dispositif selon la revendication 6 caractérisé en ce que ces moyens de régulations comprennent un détecteur de niveau (80), un réservoir (124) de liquide caloporteur, une conduite reliant l'enceinte et le réservoir, une électrovanne et un automate interposé entre le détecteur (80) et l'électrovanne de façon à compenser toute variation de niveau par ouverture de l'électrovanne.

8. Dispositif selon l'une quelconque des revendications précédentes, caractérisé en ce que l'enceinte close (32) est une cuve (46) étanche munie d'un couvercle (50), supportée dans un bâti (30) comprenant un piquage d'introduction débouchant dans le fluide (33), relié à la conduite de retour de la cavité, un piquage d'évacuation débouchant au dessus du liquide relié à la conduite d'alimentation de la cavité, un piquage de vidange (100), un piquage (102) pour la sonde (104) de mesure de température débouchant au dessus du liquide, un piquage (82) pour le détecteur de niveau et au moins un piquage (108) pour des résistances électriques de chauffage du liquide contenu dans l'enceinte.

9. Dispositif selon l'une quelconque des revendications précédentes, caractérisé en ce que l'électrovanne (116) est reliée à un réservoir (130) de récupération des condensats de façon à permettre un recyclage du liquide caloporteur.

10. Dispositif selon l'une quelconque des revendications précédentes, caractérisé en ce que l'enceinte (32) est disposée à un niveau situé au dessus des points d'entrée et de sortie de la cavité et en ce qu'il comprend une seconde enceinte (200) disposée à la sortie de la cavité et interposée sur le conduit de retour (120) et une pompe (220) interposée entre cette seconde enceinte et la cuve (46) de l'enceinte.

11. Dispositif selon l'une quelconque des revendications précédentes caractérisé en ce que la pièce massive est un plateau de presse et en ce que le fluide caloporteur est de l'eau.

FIG_1

FIG_2

FIG_3

FIG. 5

FIG. 4

FIG_6

FIG _7

FIG_8

FIG_9

Office européen
des brevets

# RAPPORT DE RECHERCHE EUROPEENNE

Numero de la demande

EP   91 40 0149

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2005835 (PREESWERK SCHWABEN OTTO SINGLE K.G.)<br>* page 2, ligne 31 - page 3, ligne 7 *<br>* page 5, lignes 1 - 17 *<br>* page 6, lignes 7 - 31; figure * | 1, 6, 7 | G05D23/19<br>B30B15/34 |
| Y | --- | 2 | |
| Y | FR-A-2329011 (VIRHORLAT NARODNY PODNIK SNINA)<br>* page 4, lignes 8 - 12; figure *<br>----- | 2 | |

**DOMAINES TECHNIQUES RECHERCHES (Int. Cl.5 )**

F24D
B30B
B29C
G05D

Le présent rapport a été établi pour toutes les revendications

| Lieu de la recherche | Date d'achèvement de la recherche | Examinateur |
|---|---|---|
| LA HAYE | 09 AVRIL 1991 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)